# EUROPEAN PATENT SPECIFICATION

(11) **EP 2 082 914 B1**
(45) Date of publication and mention of the grant of the patent: **07.04.2010**
(21) Application number: 08425030.7
(22) Date of filing: 22.01.2008
(51) Int. Cl.: B60K 15/05, F03G 7/06

(54) **Fuel filling lid for a motor-vehicle, with a shape memory actuator device for unlocking the lid and a flexible connecting member associated with the actuator device**
Tankeinfüllstutzen für ein Kraftfahrzeug mit einer Formspeicherungsaktuatorvorrichtung zur Entsperrung des Stutzens und einem mit der Aktuatorvorrichtung verbundenen Anschlusselement
Bouchon de remplissage de carburant pour véhicule à moteur doté d'un dispositif actionneur à mémoire de forme pour déverrouiller le bouchon et élément de raccordement flexible associé au dispositif actionneur

(43) Date of publication of application: 29.07.2009
(73) Proprietor: Fiat Group Automobiles S.p.A., 10135 Torino (TO) (IT)
(72) Inventor: Tosco, Franco, 10135 Torino (IT); Alacqua, Stefano, 10135 Torino (IT); Biasiotto, Marco, 10135 Torino (IT)
(74) Representative: Notaro, Giancarlo

(56) References cited:
- EP-A- 1 617 022
- WO-A-03/003137
- WO-A-2006/055618
- FR-A- 2 819 452

## Description

The present invention relates to a lid assembly for access to the fuel filler on a motor vehicle, of the known type which comprises:
- a supporting structure fixed to the structure of the motor vehicle;
- a lid mounted articulated on the supporting structure and displaceable between a closed position and an open position;
- a locking member, for locking the lid in its closed position, displaceable between an active locking position and a deactivated position, in which it enables opening of the lid; and
- electrical actuator means, to cause a displacement of the aforesaid locking member towards its deactivated position.

Solutions of the type referred to above, which enable remote control of deactivation of the aforesaid locking member in order to enable opening of the lid, are known and have been used for some time. In particular, there have already been used for some time now devices in which the aforesaid actuator means are constituted by an electric motor and by a control transmission, for example of the pinion-and-rack type, which enables conversion of the rotary movement of the output shaft of the electric motor into a linear movement of the member for locking the lid.

Said known solutions present the drawback of being relatively cumbersome, of entailing laborious operations of assembly, with a consequent increase in production costs, and finally of frequently imposing considerable limits on the freedom of the designer in defining the shape of the bodywork of the motor vehicle in the area in which the fuel-filler lid is provided.

It has likewise already been proposed in the past to apply a shape-memory actuator to the control for unlocking a fuel-filler lid (see WO2004001235).

Shape-memory materials are constituted by nickel-based and titanium-based metal alloys that present the property of passing from a martensitic structure to an austenitic structure when their temperature exceeds a transition value that can be pre-set so as to be higher than the ambient temperature. Above said transition temperature, the aforesaid materials are thus subject to a change of shape. For example, in the case of a wire constituted by a shape-memory alloy it is possible to get the wire to be subject to a reduction in length when its temperature is raised above the transition point, for example subjecting the wire to a passage of electric current.

On the basis of said characteristics there has already been proposed a wide range of applications of shape-memory actuators in order to control various members on board a motor vehicle. A wide range of patents regarding said actuators, amongst which in particular a patent regarding a shape-memory flexible-cable actuator (see EP 1 399 793 B1) have been filed by Centro Ricerche Fiat, a company belonging to the same group as the present applicant.

The document No. WO2004001235 shows a shape-memory actuator designed for various possible applications, amongst which is also mentioned the application to the fuel-filler lid of a motor vehicle. However, said known actuator has evidently not been devised specifically for the application that is here of interest and consequently presents some limits to the effective possibility of using it to advantage for said purpose. In the case of said known solution, the actuator is constituted by a lamina element, which may undergo deformation in bending, constituted by a shape-memory material, having one end designed to be fixed to a supporting structure, and the opposite end capable of oscillating, following upon bending deformation. Said end carries a tooth usable as element for locking the lid. It is evident that said solution requires, for the purposes of obtaining the travel necessary for the engagement tooth, a quite considerable length of the flexible element, with consequent problems in terms of encumbrance, housing in the structure of the motor vehicle, and compatibility with the styling choices of the designers of the bodywork.

A lid assembly as set forth in the preamble of claim 1 is known from EP-A-1 617 022.

The purpose of the present invention is to provide an actuator device for the fuel-filler lid of a motor vehicle that will be able to overcome all the drawbacks that have been described above with reference to the known art.

With a view to achieving said purpose, the subject of the present invention is a lid assembly for access to the fuel filler of a motor vehicle, comprising the features of claim 1.

The invention is also applicable to the case where the elongated shape-memory element is situated adjacent to said engagement member, but in a position out of line with respect to the direction of displacement thereof. In said case, according to the invention, set between said first end of the shape-memory element and the aforesaid locking member of the lid is a connection member that can undergo bending deformation.

The actuator provided in the present invention presents consequently on the one hand the advantage of an extremely simple structure of small dimensions and on the other hand the further advantage of allowing an extreme freedom to the designer since the actuator itself can be provided adjacent, but not directly annexed, to the locking member of the lid and can also be oriented so as to present a direction of actuation not necessarily coinciding with the direction of displacement of the locking member of the lid.

Preferably, associated to the locking member of the lid are spring means tending to recall said member towards its active locking position when the shape-memory element is not activated.

Once again preferably, for the purposes of guaranteeing a minimum energy consumption, it is possible to envisage that the electronic control unit activates the shape-memory element only for an instant, following upon transmission of a control signal for unlocking the lid, i.e., just for the time necessary to enable opening of the lid. It is also possible to envisage spring means that push the lid towards a partially open position as soon as the locking member is deactivated. Once the lid is opened, the shape-memory element then returns to its resting position, without it having to be kept constantly in the contracted condition through the supply of electric current. In the case of such a solution, manual closing of the lid causes again engagement of the locking member in its active condition following upon engagement of said locking member on the contrast element provided on the lid. For this purpose, in said embodiment the locking member preferably presents a cam-shaped surface, designed to cause temporary recession of the locking member when the contrast element on the lid is engaged thereon following upon manual closing of the lid. The spring means associated to the locking member then causes it to snap back into the extracted position, for locking the lid once the lid is completely closed.

In a different embodiment, it may be envisaged that the shape-memory element remains in the contracted condition and is then deactivated following upon detection of closing of the lid.

According to a further possible alternative, there may be envisaged a shape-memory actuator of a bistable type, where each new current pulse supplied to the actuator determines passage of the controlled member from the operating position in which it is set, whatever this may be, to the opposite position.

Whatever in any case the solution chosen for controlling the supply of current to the shape-memory actuator of the present invention, there then always remains the advantage of a structure that associates to the fact of having extremely small dimensions and weight the advantage of enabling an extreme flexibility of design as regards the positioning and orientation of said device on the motor vehicle.

Further characteristics and advantages of the invention will emerge from the ensuing description with reference to the annexed plates of drawings, which are provided purely by way of non-limiting example and in which:
- Figure 1 is a schematic perspective view illustrating a lid assembly according to the invention in a first embodiment;
- Figure 2 is a cross-sectional view of the device of Figure 1;
- Figure 3 is a perspective view and at an enlarged scale of a detail of the device of Figure 1;
- Figure 4 is a cross-sectional view at an enlarged scale of a detail of the device of Figures 1-3;
- Figure 5 illustrates a variant of the detail illustrated in Figure 4; and
- Figure 6 is a perspective view of the solution of Figure 5.

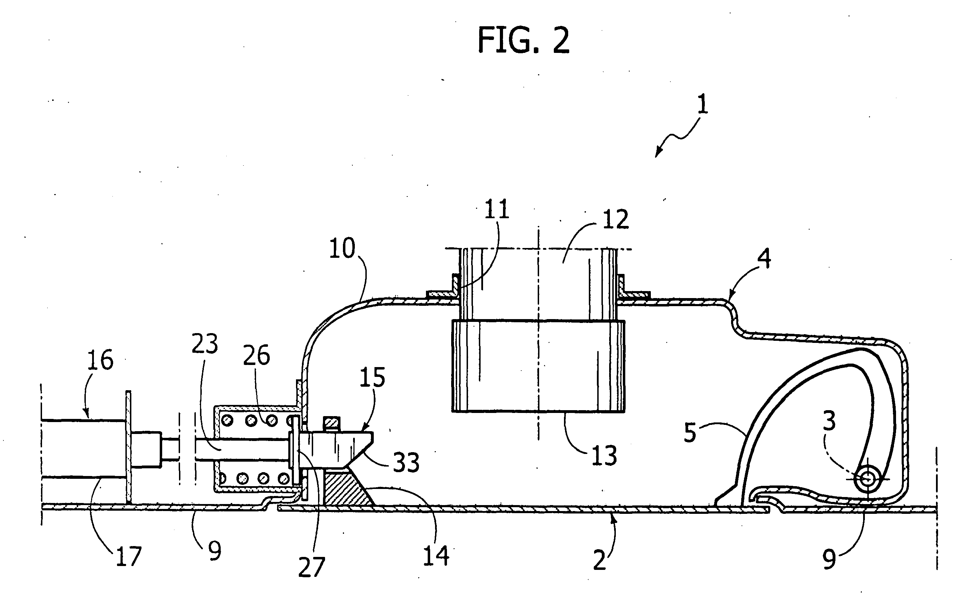

The figures refer to a lid assembly for access to the fuel filler of a motor vehicle of the type in which the lid is integrated in the surface of the bodywork of the motor vehicle. The assembly illustrated, designated as a whole by the reference number 1, comprises a lid 2, for example made of sheet metal, which is mounted articulated about an axis 3 (Figure 2) on a supporting structure 4. In the example illustrated, the lid is fixed, for example by means of screws, to the end of a curved arm 5, for example made of metal or plastic material, the opposite end of which is mounted in an articulated way on the supporting structure 4. In the case of the example illustrated, the supporting structure 4 comprises a boxlike body 6 having a front opening 7 provided along its edge with a peripheral flange 8 and fixed, by any suitable technique, to the structure of the motor vehicle so that in its closed position the lid 2 has its outer surface flush with the outer surface of a panel 9 of the bodywork of the motor vehicle (Figure 2). The supporting structure 4 moreover has a bottom wall 10 having an opening 11 for insertion of the filler 12 for the fuel, equipped with a cap 13.

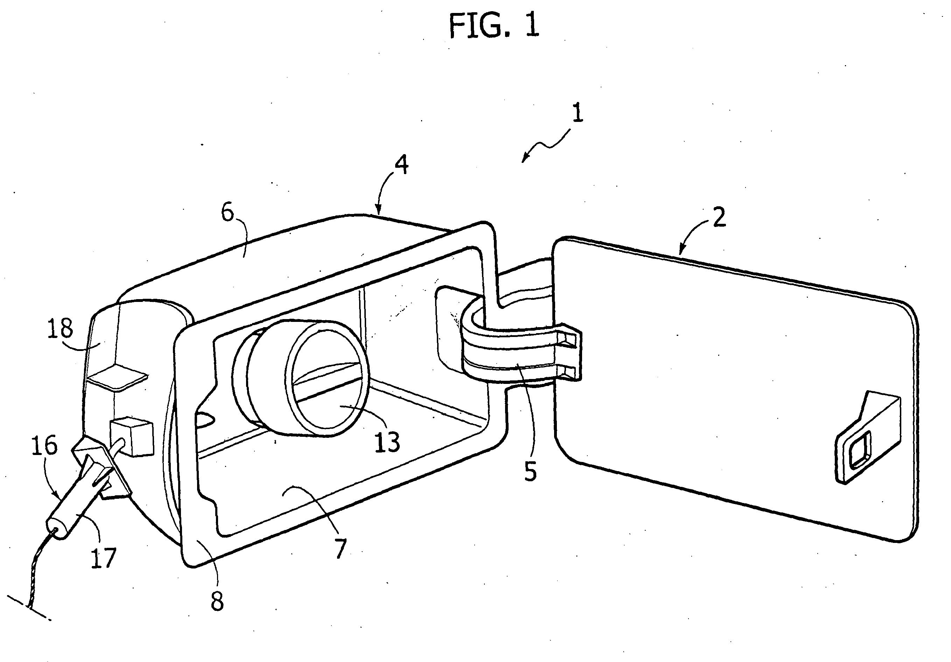

Figures 1, 2 show the filler 12 and the cap 13 even though obviously said situation corresponds to a condition where the lid assembly 1 is installed on the motor vehicle. In addition, the drawings do not illustrate the constructional details of the cap 13, since it can be made in any known way and does not fall, taken in itself, within the scope of the present invention.

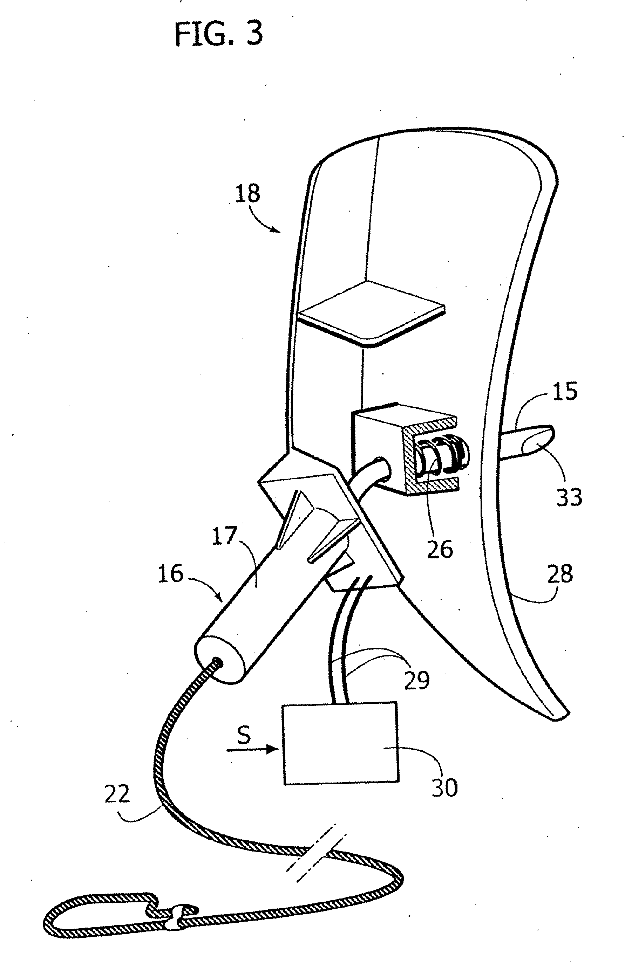

Once again with reference to Figures 1 and 2, fixed on the inner surface of the lid 2 is a contrast element 14, which in the example illustrated is constituted by a small frame with an opening, designed to co-operate with a member 15 for locking the lid 2 in the closed position. The locking member 15 is associated to an actuator assembly 16 having an elongated cylindrical casing 17 that is supported by an auxiliary supporting structure 18 (see Figure 3), which is fixed on the supporting structure 4 on one side thereof or, alternatively, is fixed directly to the structure of the motor vehicle. The auxiliary supporting structure 18 is more clearly visible at an enlarged scale in Figure 3.

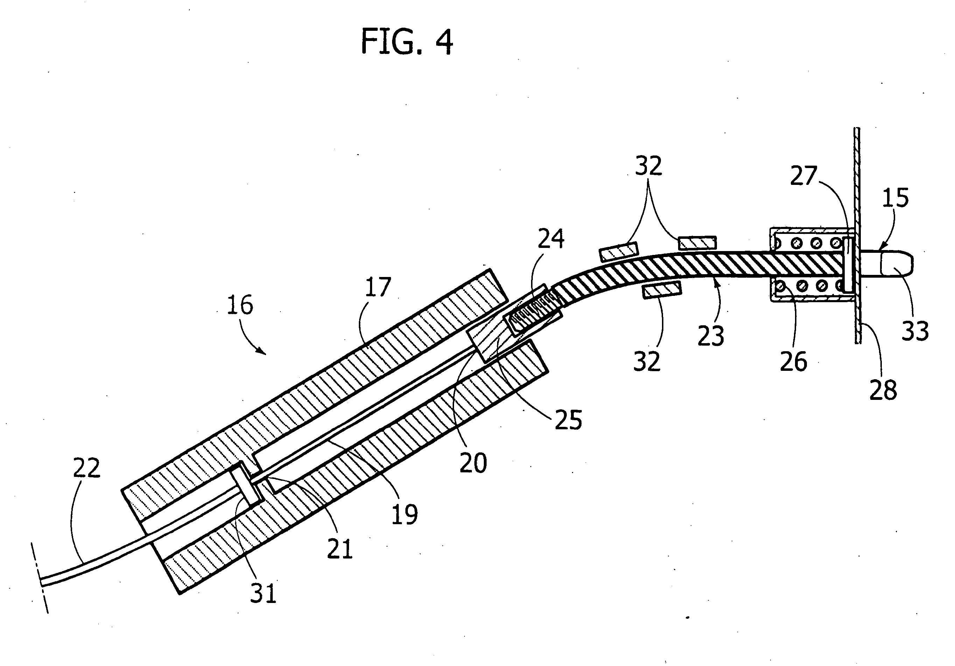

With reference now to Figure 4, set inside the casing 17 of the actuator assembly 16 is an elongated shape-memory element 19, for example in the form of a cable, made of a shape-memory metal alloy, prearranged in such a way that it undergoes a contraction in length when its temperature exceeds a transition point, higher than the ambient temperature. In the example schematically illustrated in Figure 4, the shape-memory element 19 has a first end 20 operatively connected, in the way that will be described in what follows, to the locking member 15, and a second end 21, which is connected to a cable 22 for emergency manual actuation of unlocking of the lid 2. As clearly visible in Figure 4, the actuator assembly 16 is set adjacent, but not immediately up against the locking member 15 of the lid and is moreover oriented according to a direction out of line with respect to the locking member 15, so that the direction of the shape-memory cable 19 is inclined with respect to the direction of displacement of the locking member 15. This is obtained in so far as the first end 20 of the shape-memory cable is connected to the locking member 15 by means of interposition of a connection member 23 of a material that may undergo bending deformation. The element 23 can be either a metal element, in which case it can have the shape of a metal cable or a metal strap, or else again, as in the specific case illustrated, can be made of plastic material, in which case it can likewise present, for example, a strap-shaped configuration. The end of the element 23 facing the shape-memory cable 19 carries a threaded appendage 24 screwed within a threaded seat of a body 25 that is connected to the first end 20 of the shape-memory cable 19 and is guided in a slidable way within the casing 17. Said threaded union can be replaced by a male-female snap coupling, of the type for example used for electrical connectors. At the other end, the flexible element 23 is connected to a rigid body constituting the locking member 15, for example made of metal material.

In the case of the example illustrated, moreover provided is a helical spring 26 acting against a collar 27 mounted on the locking member 15, in order to recall the latter towards its active position, in which said collar 27 comes to bear upon a wall 28 of the auxiliary supporting structure 18 (see also Figure 3). Also visible in Figure 3 are the electric cables 29 connected to the two opposite ends 20, 21 of the shape-memory cable 19, for supply of an electrical current through the cable 19.

Figure 3 also illustrates in a schematic way an electronic control unit 30 that controls supply of electrical current to the shape-memory cable 19 and is prearranged for receiving a control signal S for opening of the lid 2, for example, generated by the driver by means of a push-button on the dashboard of the motor vehicle.

As already referred to above, the electrical supply to the cable 19 is activated for a pre-set time in order to cause a contraction in the length thereof when it is to unlock the lid. The reduction in length of the shape-memory element 19 necessarily entails a displacement of the first end 20 towards the left (as viewed in Figure 4) since the opposite end is connected to an arrest element 31 that bears upon a surface of arrest of the casing 17, designed to prevent any movement towards the right (once again as viewed in Figure 4) of the aforesaid element 31. The displacement to the left (once again as viewed in Figure 4) of the first end 20 of the shape-memory cable 19 consequently causes a recession of the locking member 15 into the unlocking condition, against the action of the spring 26. During said movement, the flexible element 23 transmits the displacement of the shape-memory cable to the locking member 15 and is guided in said movement by the appendages 32 forming part of the supporting structure 18. Of course, in the case where the connection member is in the form of a metal cable, the guide means of the latter can also be constituted by a sheath of the traditional type used in Bowden cables even though of course the simpler solution, without any sheath, is preferred.

In the case illustrated, the locking member 15 has a configuration resembling a spring latch, with an inclined surface 33 designed to co-operate with the contrast element 14.

When the lid 2 is to be opened, the shape-memory element 19 is activated for a brief interval of time to enable unlocking of the lid. Possibly, a spring may be provided that recalls the lid 2 towards an open condition as soon as the locking member 15 is deactivated. Once the lid 2 has been at least partially opened, the locking member 15 can return into its extracted position so as not to require maintenance of the shape-memory element in its activated condition, with consequent saving of electrical energy. The subsequent closing of the lid 2 causes temporary recession of the locking member 15 against the action of the spring 26 and then again locking of the lid, following upon engagement of the contrast element 14 against the cam-shaped surface 33 of the locking member. As has been said, any alternative solution is possible, including that of a shape-memory device of a bistable type, according to what has already been described.

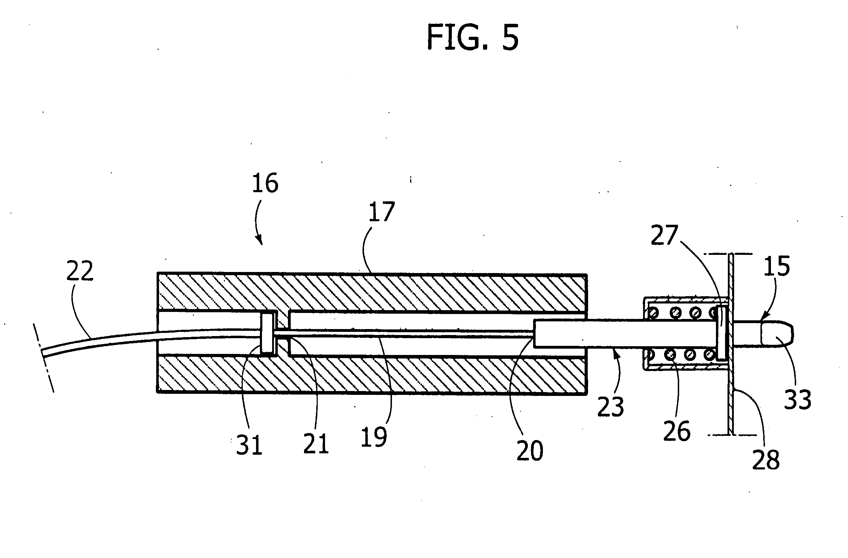

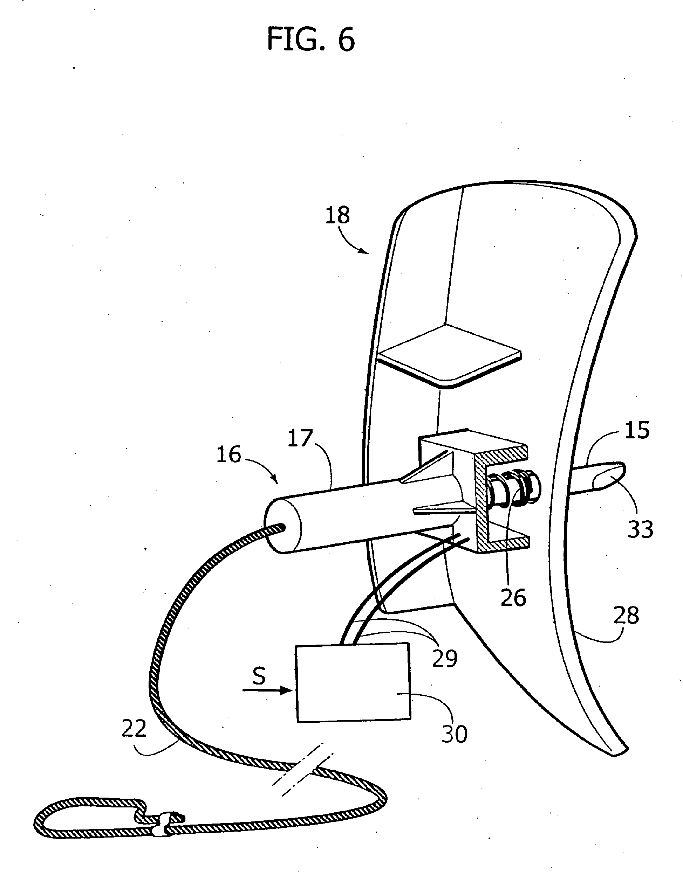

Figures 5 and 6 of the annexed plates of drawings show a specific solution in the case where the casing 17 of the actuator assembly is set aligned with the direction of displacement of the locking member 15. In this case, obviously, it would not in theory be necessary for the connection member 23 to be made of elastically deformable material.

The device according to the invention, thanks to the prearrangement of the flexible connection member, presents in any case a considerable versatility of use, enabling a positioning thereof to be found easily in the structure of the vehicle and at the same time leaving wide margins of freedom in the design of the bodywork in the area in which the fuel-filler lid is provided. The flexible connection member is on the other hand simpler and more functional than a conventional transmission system, for example of the Bowden-cable type, since it does not strictly require any prearrangement of guide elements and/or transmission elements and by itself enables the necessary function of connection and transmission to be fulfilled, with the further advantage that the actuator device and corresponding support, the connection member, and the locking member form a single assembly that can be pre-assembled and installed in an easy and fast way on the motor vehicle.

## Claims

1. A lid assembly for access to the fuel filler of a motor vehicle comprising:
- a supporting structure (4) fixed to the structure of the motor vehicle;
- a lid (2) mounted articulated on the supporting structure (4) and displaceable between a closed position and an open position;
- a locking member (15) for locking the lid (2) in its closed position, displaceable between an active locking position and a deactivated position, in which it enables opening of the lid; and
- electrical actuator means for causing a displacement of the aforesaid locking member (15) towards its deactivated position,
said electrical actuator means comprising:
- at least one elongated shape-memory element (19) designed to decrease in length following upon a heating above a predetermined transition temperature, higher than the ambient temperature; and
- means (30) for supplying an electrical current through the shape-memory wire in order to cause heating thereof above said transition temperature, including an electronic control unit for controlling electrical supply to the shape-memory element (19), designed to cause activation of the shape-memory element following upon transmission of a control signal (S);
- in which said elongated shape-memory element is set adjacent to said lid (2);
- in which a first end (20) of the shape-memory element (19) is connected to said locking member (15); **and**
- in which set between said first end (20) of the shape-memory element (19) and the aforesaid locking member (15) is a connection member (23) that may undergo bending deformation,
said lid assembly being **characterized in that** the end (21) of the shape-memory element (19) opposite to said first end (20) is connected to a manually controlled tensile member (22), for emergency unlocking of the lid (2);
and
**in that** the actuator device (17, 19) and the corresponding support (18), the connection member (23), and the locking member (15) form a single assembly that can be pre-assembled.

2. The lid assembly according to Claim 1, in which the aforesaid elongated shape-memory element is situated adjacent to the aforesaid engagement member (15) but in a position out of line with respect to the latter so that the direction of displacement of the aforesaid first end (20) of the shape-memory element (19) is inclined with respect to the direction of displacement of the locking member (15).

3. The lid assembly according to Claim 2, **characterized in that** said connection member (23) is made of metal material.

4. The lid assembly according to Claim 3, **characterized in that** said connection member (23) is constituted by a flexible metal cable.

5. The lid assembly according to Claim 2, **characterized in that** said connection member (23) is constituted by a body made of synthetic material.

6. The lid assembly according to Claim 2, **characterized in that** said connection member (23) is constituted by a strap-shaped body.

7. The lid assembly according to Claim 2, **characterized in that** said connection member is guided between supports (32) forming part of an auxiliary supporting structure (18), which carries a casing (17) within which said shape-memory element (19) is set.

8. The lid assembly according to Claim 2, **characterized in that** said connection member (23) is connected at one end to a rigid element constituting said locking member (15) and at the opposite end to a rigid body (25), which is in turn connected to the aforesaid first end (20) of the elongated shape-memory element (19).

9. The lid assembly according to Claim 8, **characterized in that** said locking member (15) is connected to the aforesaid rigid body (25) by means of a threaded coupling.

10. The lid assembly according to Claim 8, **characterized in that** said locking member (15) is connected to the aforesaid rigid body (25) by means of a male-female snap coupling.

11. The lid assembly according to Claim 1, **characterized in that** elastic means (26) are provided tending to push the locking member (15) towards its active locking position.

## Patentansprüche

1. Eine Stutzenanordnung für den Zugang zum Tankdeckel eines Kraftfahrzeugs, umfassend:
- eine unterstützende Struktur (4), die an der Struktur des Kraftfahrzeugs befestigt ist;
- einen Stutzen 2, der drehbar auf der unterstützenden Struktur (4) befestigt ist, und zwischen einer geschlossenen Position und einer offenen Position versetzbar ist;
- ein sperrendes Bauteil (15) zum Sperren des Stutzens (2) in seiner geschlossenen Position, welches zwischen einer aktiven sperrenden Position und einer inaktiven sperrenden Position versetzbar ist, in welcher es ein Öffnen des Stutzens ermöglicht; und
- elektrische Betätigungsmittel zum Verursachen einer Versetzung des sperrenden Bauteils (15) in Richtung seiner inaktiven Position,
- wobei die elektrischen Betätigungsmittel umfassen:
- zumindest ein gestrecktes Formgedächtniselement (19), welches zur Längenabnahme aufgrund eines Heizens über eine vorherbestimmte Übergangstemperatur gestaltet ist, die höher als die Umgebungstemperatur ist; und
- Mittel (30) zum Zuführen eines elektrischen Stroms durch den Formgedächtnisdraht, um ein Aufheizen des Drahts über die Übergangstemperatur zu verursachen, einschließlich einer elektronischen Steuereinheit zum Steuern der elektrischen Versorgung des Formgedächtniselements (19), welche gestaltet ist, um eine Aktivierung des Formgedächtniselements aufgrund einer Übertragung eines Steuersignals (S) zu verursachen;
- in welcher sich das gestreckte Formgedächtniselement benachbart zu dem Stutzen (2) befindet;
- in welchem ein erstes Ende (20) des Formgedächtniselements (19) mit dem sperrenden Bauteil (15) verbunden ist; und
- in welchem zwischen dem ersten Ende (20) des Formgedächtniselements (19) und dem sperrenden Bauteil (15) ein Verbindungsbauteil (23) eingesetzt ist, was einer Biegedeformierung unterworfen werden kann,
- wobei die Stutzenanordnung **dadurch gekennzeichnet ist, dass** das Ende (21) des Formgedächtniselements (19) gegenüber dem ersten Ende (20) mit einem manuell gesteuerten Zugbauteil (22) für eine Not-Entsperrung des Stutzens (2) verbunden ist; und
- **dadurch**, dass die Betätigungsvorrichtung (17, 19) und die entsprechende Unterstützung (18), das Verbindungsbauteil (23) und das sperrende Bauteil (15) eine einzige Anordnung bilden, die vormontiert werden kann.

2. Stutzenanordnung nach Anspruch 1, in welcher das vorgestreckte Formgedächtniselement benachbart zu dem Eingriffsbauteil (15) angeordnet ist, jedoch in einer Position außerhalb einer Linie in Bezug auf letzteres, so dass die Versetzungsrichtung des ersten Endes (20) des Formgedächtniselements (19) mit Bezug auf die Versetzungsrichtung des sperrenden Bauteils (15) geneigt ist.

3. Stutzenanordnung nach Anspruch 2, **dadurch gekennzeichnet, dass** das Verbindungsbauteil (23) aus einem metallischen Material hergestellt ist.

4. Stutzenanordnung nach Anspruch 3, **dadurch gekennzeichnet, dass** das Verbindungsbauteil (23) durch ein flexibles Metallkabel gebildet ist.

5. Stutzenanordnung nach Anspruch 2, **dadurch gekennzeichnet, dass** das Verbindungsbauteil (23) durch einen Körper aus einem synthetischen Material gebildet ist.

6. Stutzenanordnung nach Anspruch 2, **dadurch gekennzeichnet, dass** das Verbindungsbauteil (23) durch einen streifenförmigen Körper gebildet ist.

7. Stutzenanordnung nach Anspruch 2, **dadurch gekennzeichnet, dass** das Verbindungsbauteil zwischen Unterstützungen (32) geführt ist, die einen Teil einer zusätzlichen unterstützenden Struktur (18) bilden, welche ein Gehäuse (17) trägt, innerhalb vom welchem das Formgedächtniselement (19) eingesetzt ist.

8. Stutzenanordnung nach Anspruch 2, **dadurch gekennzeichnet, dass** das Verbindungsbauteil (23) an einem Ende mit einem starren Element verbunden ist, welches das sperrende Bauteil (15) bildet, und an dem gegenüberliegenden Ende mit einem starren Körper (25) verbunden ist, welcher wiederum mit dem ersten Ende (20) des gestreckten Formgedächtniselements (19) verbunden ist.

9. Stutzenanordnung nach Anspruch 8, **dadurch gekennzeichnet, dass** das sperrende Bauteil (15) mit dem starren Körper (25) mittels einer Gewindekupplung verbunden ist.

10. Stutzenanordnung nach Anspruch 8, **dadurch gekennzeichnet, dass** das sperrende Bauteil (15) mit dem starren Körper (25) mittels einer männlichweiblich Schnappkupplung verbunden ist.

11. Stutzenanordnung nach Anspruch 1, **dadurch gekennzeichnet, dass** die elastischen Mittel (26), bereitgestellt sind, die dazu neigen, das sperrende Bauteil (25) in Richtung seiner aktiven sperrenden Position zu drücken.

## Revendications

1. Un bloc à couvercle pour accéder au remplissage de carburant d'un véhicule automobile, comprenant :
- une structure support (4) fixée à la structure du véhicule automobile ;
- un couvercle (2) monté articulé sur la structure support (4) et déplaçable entre une position fermée et une position ouverte ;
- un organe de verrouillage (15) pour verrouiller le couvercle (2) dans sa position fermée, déplaçable entre une position de verrouillage active et une position désactivée, dans laquelle il autorise l'ouverture du couvercle ; et
- des moyens actionneurs électriques pour provoquer un déplacement de l'organe de verrouillage précité (15) en direction de sa position désactivée,
lesdits moyens actionneurs électriques comprenant :
- au moins un élément allongé à mémoire de forme (19) conçu pour que sa longueur diminue sous l'effet d'un chauffage au-dessus d'une température de transition prédéterminée, supérieure à la température ambiante ; et
- des moyens (30) pour délivrer un courant électrique au travers du fil à mémoire de forme afin de provoquer le chauffage de celui-ci au-dessus de ladite température de transition, comprenant une unité de commande électronique pour commander l'alimentation électrique de l'élément à mémoire de forme (19), conçus pour provoquer l'activation de l'élément à mémoire de forme suite à l'émission d'un signal de commande (S) ;
- dans lequel ledit élément à mémoire de forme allongé est disposé adjacent audit couvercle (2) ;
- dans lequel une première extrémité (20) de l'élément à mémoire de forme (19) est reliée audit organe de verrouillage (15) ; et
- dans lequel un organe de liaison (23) qui peut subir une déformation de courbure est disposé entre ladite première extrémité (20) de l'élément à mémoire de forme (19) et l'organe de verrouillage précité (15),
ledit bloc à couvercle étant **caractérisé en ce que** l'extrémité (21) de l'élément à mémoire de forme (19) opposée à ladite première extrémité (20) est reliée à un organe extensible commandé manuellement (22), pour le déverrouillage d'urgence du couvercle (2) ; et
**en ce que** le dispositif actionneur (17, 19) et le support correspondant (18), l'organe de liaison (23) et l'organe de verrouillage (15) forment un bloc unique qui peut être pré-assemblé.

2. Le bloc à couvercle selon la revendication 1, dans lequel l'élément allongé à mémoire de forme précité est situé adjacent à l'organe de venue en prise précité (15) mais dans une position qui n'est pas alignée par rapport à ce dernier de sorte que la direction de déplacement de la première extrémité précitée (20) de l'élément à mémoire de forme (19) est inclinée par rapport à la direction de déplacement de l'organe de verrouillage (15).

3. L'ensemble à couvercle selon la revendication 2, **caractérisé en ce que** ledit organe de liaison (23) est réalisé en un matériau métallique.

4. L'ensemble à couvercle selon la revendication 3, **caractérisé en ce que** ledit organe de liaison (23) est constitué d'un câble métallique flexible.

5. L'ensemble à couvercle selon la revendication 2, **caractérisé en ce que** ledit organe de liaison (23) est constitué d'un corps réalisé en matériau synthétique.

6. L'ensemble à couvercle selon la revendication 2, **caractérisé en ce que** ledit organe de liaison (23) est constitué d'un corps en forme de bride.

7. L'ensemble à couvercle selon la revendication 2, **caractérisé en ce que** l'organe de liaison est guidé entre des supports (32) qui font partie d'une structure support auxiliaire (18) qui porte un boîtier (17) à l'intérieur duquel est disposé ledit élément à mémoire de forme (19).

8. L'ensemble à couvercle selon la revendication 2, **caractérisé en ce que** ledit organe de liaison (23) est relié à une extrémité à un élément rigide constituant ledit organe de verrouillage (15) et à l'extrémité opposée à un corps rigide (25), qui est lui-même relié à la première extrémité précitée (20) de l'élément allongé à mémoire de forme (19).

9. L'ensemble à couvercle selon la revendication 8, **caractérisé en ce que** ledit organe de verrouillage (15) est relié au corps rigide précité (25) au moyen d'un accouplement fileté.

10. L'ensemble à couvercle selon la revendication 8, **caractérisé en ce que** ledit organe de verrouillage (15) est relié au corps rigide précité au moyen d'un accouplement mâle-femelle à emboîtement.

11. L'ensemble à couvercle selon la revendication 1, **caractérisé en ce qu'**il est prévu des moyens élastiques (26) tendant à pousser l'organe de verrouillage (15) en direction de sa position active de verrouillage.
